# EUROPEAN PATENT APPLICATION

(11) **EP 2 166 716 A2**
(43) Date of publication of application: **24.03.2010**
(21) Application number: 09170883.4
(22) Date of filing: 21.09.2009
(51) Int. Cl.: H04L 12/58

(54) **System and method for cipher E-mail protection**

(30) Priority: 19.09.2008 US 98679 P
(71) Applicant: Cemaphore Systems, Inc., San Mateo CA 94402 (US)
(72) Inventor: Ekstrom, J.J, Lindon, UT 84042 (US); Pike, Tyrone, San Mateo, CA 94402 (US); Sutherland, John, Provo, UT 84604 (US)
(74) Representative: McCann, Heather Alison

(57) **Abstract**

The preferred embodiments of the present invention disclose a security transformation system which includes an e-mail client, a cipher proxy, a dictionary database and an Internet e-mail system. The system is capable of generating and receiving messages and performing a cipher substitution and encryption of key fields of messages when they are stored at a user's Internet e-mail system. When the messages are received or accessed the system permits deciphering and decrypting the message using a reverse security transformation The preferred embodiments of the method of the present invention comprises steps of generating and receiving messages at an Internet e-mail system, performing a security transformation on said messages, encrypting said messages, updating a cipher dictionary at a cipher proxy, and decoding and decrypting the messages when accessed by a user.

## Description

### Field of the Invention

The present invention relates generally to data protection mechanisms and, more particularly, to protecting personal information management data (PIM) in untrusted domains such as email systems on the Internet.

### Background of the Invention

Cloud computing encompasses putting an enterprise's business operations, word documents, sales information, and personal information management solutions such as e-mail, calendar and contact information on Internet servers hosted by third parties or Internet Service providers. The benefit of cloud computing allows an enterprise or company to effectively outsource its information technology needs, email servers, and other personal information management systems to Service Providers that specialize in providing large scale network servers and hosted solutions.

For example, Microsoft provides hosted e-mail solutions for enterprises, which makes it unnecessary for companies to provide in house solutions and maintain and service their own enterprise servers within their local area network. With the cost of electronic data storage decreasing and the speed, redundancy and the efficiency of network servers and reliability and ubiquity of Internet connections increasing, small businesses and even some large scale enterprises are eventually migrating towards cloud computing systems for email and other personal information management solutions.

However, whenever an enterprise places its data outside its own company walls and entrusts the data to the third party service providers, there is always a risk that the privacy and confidentiality of the data could be comprised. One of the factors that limits adoption of cloud computing for email and other communication technologies is a distrust of the cloud solution providers or a reluctance to put company sensitive data outside of corporate control.

Cloud solution providers typically use basic username and password authentication. However, this mechanism is not considered sufficiently strong for many corporate security policies. Some cloud solution providers are believed or known to mine the data stored in their data storage systems for marketing information. This invention aims to reduce or solve these concerns.

### Summary of the Invention

In accordance with one aspect of the present invention, there is provided a cipher e-mail protection system, comprising:
an e-mail store at a first location;
an Internet e-mail system;
a cipher-proxy device for transmitting messages from said e-mail store to said Internet e-mail system;
a dictionary database for ciphering and reverse ciphering attributes of messages between said e-mail store and said Internet e-mail system; and
an encryption and decryption mechanism for encrypting and decrypting attributes of said messages.

The present invention overcomes the above-described problems with enterprise cloud computing solutions by providing a system and method for ciphering e-mail and other personal information management information. The present invention accomplishes this by use of security transformation systems and methods described below.

In one preferred embodiment according to the present invention, a security transformation system and method is disclosed which includes an email client, a cipher proxy, a dictionary database and an Internet e-mail system, for example, such as an Internet Service provider's e-mail system. According to this embodiment, a message is generated from either the user's client computer or a third party, which is received at the user's Internet email system. The message is then transformed using a cipher mechanism to encrypt the essential fields of the email using a cipher dictionary. When the message is accessed, it is decrypted using a reverse cipher security transformation method, and the original message is restored.

In another embodiment according to the present invention, the cipher dictionary and e-mail fields are encrypted using well known encryption methods including symmetric encryption, asymmetric encryption, and Public Key Infrastructure.

In accordance with another aspect of the present invention, there is provided a method for securing messages, comprising the steps of:
generating a message;
performing a security transformation in said message in one or more fields;
transmitting said transformed message to an Internet e-mail system; and
storing said transformed message at the Internet e-mail system.

In accordance with a further aspect of the present invention, there is provided a method of generating and accessing transformed messages, comprising the steps of:
generating a message;
performing a security transformation in said message in one or more fields;
transmitting the transformed message to an Internet e-mail system;
storing said transformed message at the Internet e-mail system; and
accessing said message and performing a reverse security transformation on said message.

In accordance with a yet further aspect of the present invention, there is provided a method for performing a security transformation on a message, comprising the steps of:
generating a message;
performing a cipher substitution of attributes of said message;
encrypting attributes of said message;
transmitting said transformed and encrypted message from an e-mail store to an Internet e-mail system; and
storing said transformed and encrypted message at the Internet e-mail system.

In accordance with another aspect of the present invention, there is provided a method of generating and accessing ciphered messages, comprising the steps of:
generating a message at first location;
performing a cipher substitution of terms in a message;
creating a cipher index;
encrypting said index;
transmitting the ciphered and encrypted message to the Internet e-mail system;
storing said ciphered message at the Internet e-mail system;
searching said message using said cipher index;
retrieving said ciphered and encrypted message;
decoding said ciphered message using said cipher index;
decrypting said index;
decrypting attributes of said message; and
viewing said message with an e-mail client.

In accordance with a further aspect of the present invention, there is provided a method of generating and accessing ciphered messages, comprising the steps of:
replacing required terms in an email message with corresponding terms from a dictionary for the folder or mailbox;
if a new term is encountered while replacing, creating a new mapping in the dictionary, and replacing the new word with the new cipher term; identifying all terms used by the email message;
creating a subset of the dictionary for the terms of the message;
encrypting the subset dictionary using a symmetric encryption algorithm;
attaching the encrypted subset dictionary to the email message in an extended attributes field;
using PKI technology to encrypt the symmetric key using a set of public keys for one or more users as required;
placing the encrypted symmetric key packages in an extended attributes field;
placing an encrypted term index for the message in an extended attribute field;
transmitting the coded email to the Internet e-mail system account where it is stored;
transmitting the coded email to the organizational archive where a copy is stored;
decrypting the encrypted term index; and
integrating the term index as references to this email into the corporate index.

In a preferred embodiment according to the present invention, a process for coding messages occurs as follows: a message is ciphered from terms in a dictionary; if new terms are encountered, a new set of mappings is created in the dictionary database and the terms are replaced with the ciphered terms; a subset of the dictionary is created for terms of the message; the subset dictionary is encrypted using an encryption algorithm; the encrypted subset dictionary is attached to the message in an extended attributes field; the coded message is transmitted to an Internet e-mail system; and the message is then decrypted and run through the reverse security transformation process.

Other and further features and advantages will be apparent from the following detailed description of preferred embodiments of the present invention when read in conjunction with the accompanying drawings. It should be understood that the embodiments described are provided for illustrative and exemplary purposes only, and that variations to, and combinations of, the several elements and features thereof are contemplated as being within the scope of the invention.

### Brief Description of the Drawings

Figure 1 shows the header information for a typical e-mail;
Figure 2 shows an embodiment of an e-mail after a security transformation according to preferred embodiments of the invention;
Figure 3 is an exemplary table showing which subset of headers and message body fields may be ciphered according to preferred embodiments of the invention;
Figure 4 shows an exemplary table of standard email headers that can be used according to preferred embodiments; and
Figure 5 shows a preferred embodiment of a network system for the cipher e-mail system.

### Detailed Description of the Invention

Preferred embodiments of the invention describe a system and method for providing email continuity that protects email content when the data is transmitted over and stored in the Internet. Email content may include, but is not limited to, email messages, calendar items, meeting requests, meeting acceptance/rejection notices, contacts, tasks, notes and journal items. Preferred embodiments of the invention protect searchable email content that is stored by performing a term substitution cipher replacing each term or word with a substitute term or word. This cipher is used to protect data in untrusted domains at an Internet e-mail system, such as an Internet service provider's email system.

Preferred embodiments of the invention are intended to work with all types of e-mail systems and protocols, including for example, POP, IMAP, Microsoft Exchange, IBM Lotus Notes, and well known e-mail protocols such as SMTP, MIME, POP and IMAP, as well as Microsoft's MAPI and IBM Lotus' VIM.

An email message typically includes a number of standard headers defined by the Simple Mail Transport Protocol (SMTP) that are used in routing and delivering mail. An embodiment of this invention replaces the terms in fields not necessary for further transporting email with cipher terms. The replacement algorithm allows the message to retain its original formatting, but all the natural language words will be replaced with ciphered terms.

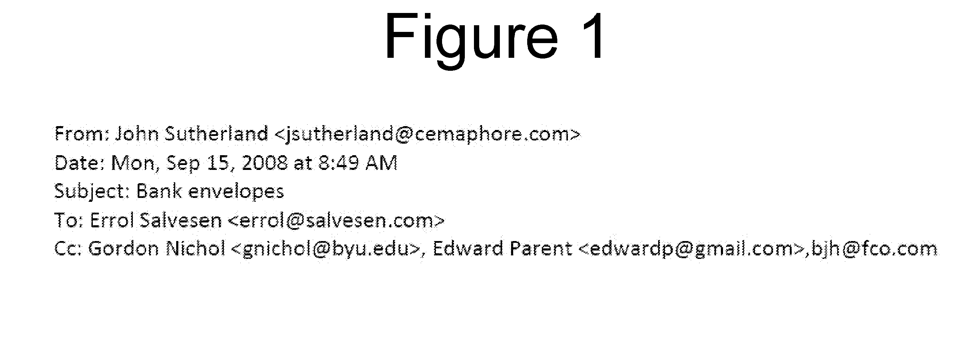

Figure 1, for example, shows the typical header information for an email message. This email message includes the from field, the date field, the subject field, the to field and the cc or bcc field.

In this embodiment, a term substitution cipher is a mechanism that replaces each term in a message with, for example, a randomly chosen term. In accordance with this embodiment, the mapping between those terms is stored in a local dictionary. For example the "the sky is blue" might be mapped to "z12 z18 z9 z35". The dictionary would hold the mappings between the natural language terms and the cipher terms. The algorithm for performing this mapping is that each time a new natural language term is encountered a randomly selected cipher term is chosen and added to the dictionary. These terms are sequential integers based on a key to avoid dictionary problems. Encoding or decoding a message is done by a look up of each word or each cipher term and determining its corresponding entry in the dictionary.

Alternatively, optionally or additionally, in order to thwart word-frequency-analysis attacks, words can have multiple entries in the dictionary. Thus, "the", which occurs frequently, might be coded as "z12", or as "z96", or as "z13", etc, and the algorithm can randomly choose which coding will be used at any given point. Conversely, however, when this approach is used, searches that operate in cipher-space will have to be expanded. Thus, in the simple case, a search for "the" can be coded as a search for "z12"; in the optional case, a search for "the" must be coded as a search for any of "z12", "z96", or "z13".

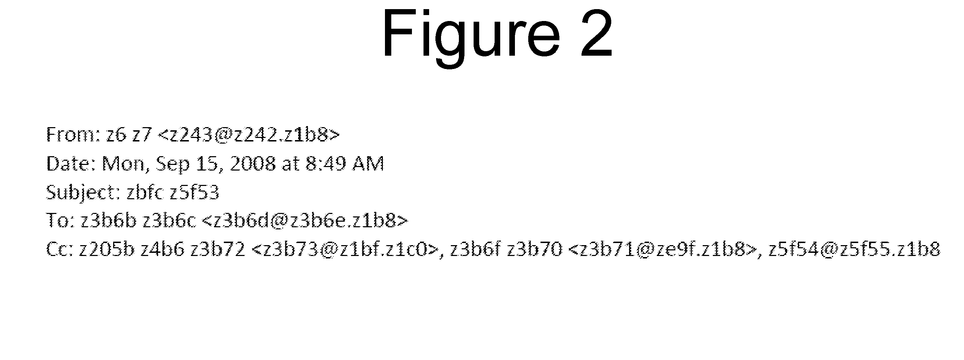

Figure 2 shows an embodiment of the method where a message is processed with cipher substitution of the fields indicated in Figure 1. As shown in Fig. 2, the natural language terms are replaced with cipher terms from the cipher dictionary, and the punctuation and formatting remains intact. In this embodiment, it is also worth noting that the date field is not ciphered in this case so that an email editor will correctly sort mail in the user's inbox or sent items folder.

Using this embodiment, the data stored at the Internet e-mail system will retain all of its formatting but all the natural language words will be replaced with ciphered terms. This term substitution algorithm can be applied selectively to various fields in the email message such as, but not limited to:
- To field
- From field
- CC field
- BCC field
- Subject field
- Email body

According to preferred embodiments, a determination of which fields are coded is table-driven. Thus, a transformation can be applied to any component of the email based on specific needs. The substitution cipher is applied to fields that need to be searched based upon terms in the semi-trusted email store. Fields needed by the email store to manage items (i.e. message-id) are not modified. Other fields and MIME attachment objects (including html bodies and text bodies) can be transformed by the substitution cipher if term-based searching is desired, or can be encrypted using AES or other encryption methods that are known by one of ordinary skill in the art. Accordingly, a security transformation on an e-mail message field encompasses the term substitution cipher, or encryption, or any other means known to one of ordinary skill to reversibly obscure the contents of such a field from view by an observer or attacker.

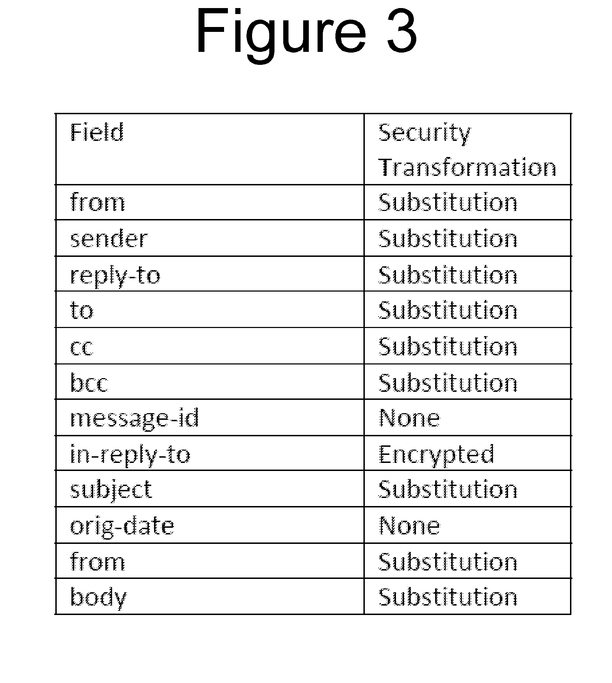

Figure 3 provides an exemplary table showing which (subset of) headers and message body shall be transformed according to preferred embodiments of the invention. For example, as shown in Fig. 3, key fields such as the from, to, subject and body field are transformed through cipher substitution, while fields such as message-id, which are needed in standard email processing and sorting are not ciphered.

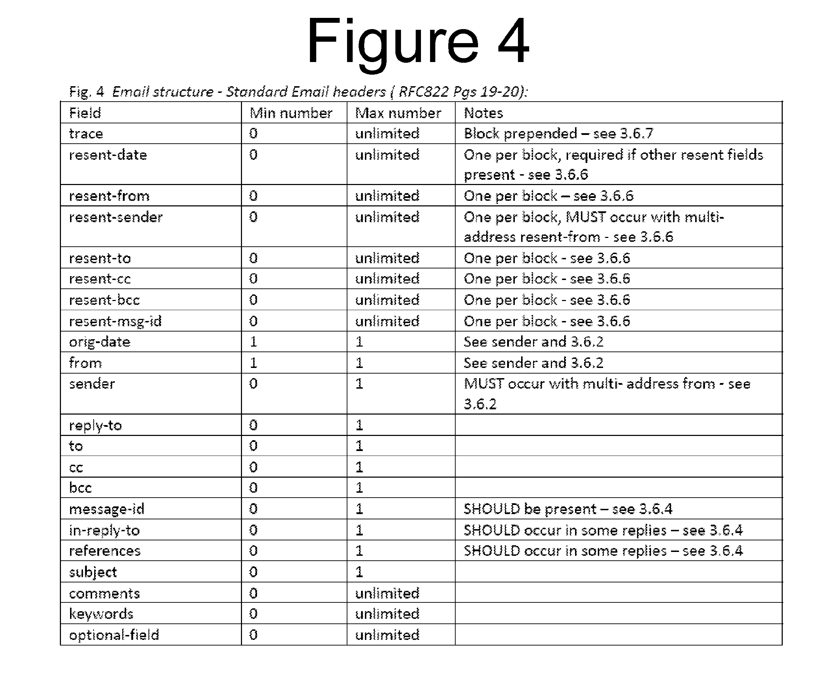

Figure 4 shows the e-mail structure and all standard email headers as defined in RFC822 that may be used in preferred embodiments of the invention. The standard also specifies a mechanism for extended attributes or fields. Any field (attribute) name starting with "x-" is stored and can be used by whatever proprietary services recognize the extended type. For example, each of the following headers were copied from an exemplary email:
X-MimeOLE: Produced By Microsoft Exchange V6.5
X-BYU-MailScanner-ID:m8IHjnPb013400
X-BYU-MailScanner: Found to be clean
X-BYU-MailScanner-SpamCheck: not spam, SpamAssassin (not cached, score=0,
   required 5, autolearn=disabled)
X-BYU-MailScanner-From: jsutherland@cemaphore.com
X-Dictionary-Info: good: 36 bad: 6
Any given deployment of an embodiment of the invention can be tuned to apply the term substitution, encrypt, or even remove extended attributes. Additional attributes have also been observed in certain emails such as:
Thread-Topic: Can we file the provisional on the cipher substitution by Friday?
Thread-Index: AckZpROLOBDnjgvEQme0GAxPfRDyRAAB 1 Qow

Typical behavior for email software is to store unaltered any attribute that is syntactically correct but unrecognized. According to certain embodiments of the invention, a deployment would monitor the attributes that are transformed and which type of transformation is applied based upon the email software used. Default behavior for unknown types would include encryption or cipher-substitution based upon customer preference. Thus, a variety of deployment models are possible and included in this invention. Preferred deployment models include but are not limited to: a proxy mechanism that intercepts and applies the ciphering transformation to messages in transit from one email store to one at a service provider. The proxy could run on a client computer, as a web service in an enterprise, a service in the Internet, a plug-in for client mail software, an Internet browser plug in, a software module in a client-based email continuity solution, a software module in an email archiving solution, or other possible network locations.

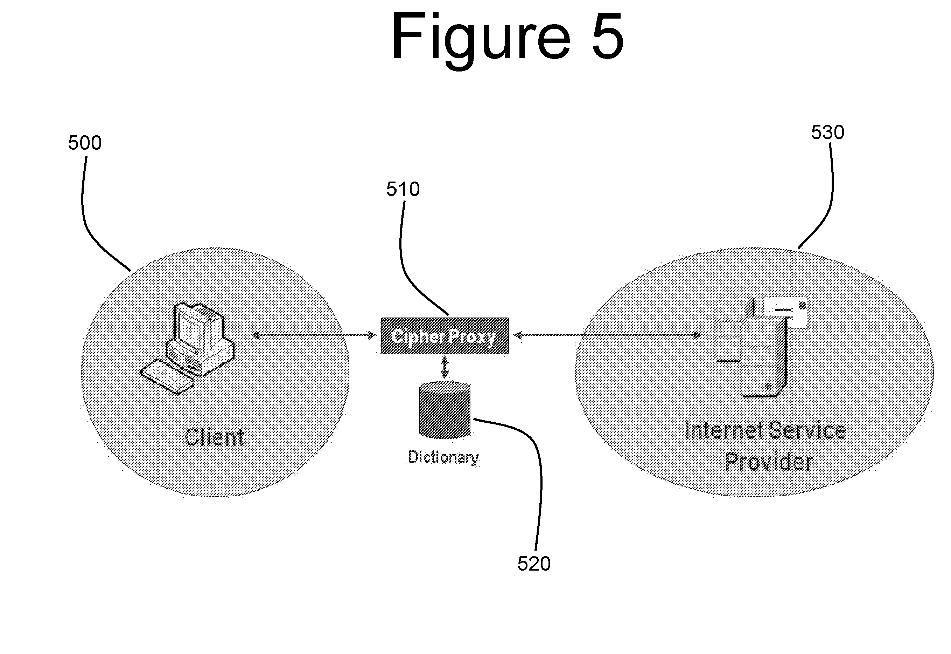

Figure 5 shows a preferred network embodiment of the cipher substitution system. Client computer 510, is a typical user or employee computer connected to a cipher proxy 510 which can be implemented in various software/hardware configurations as described above. The cipher proxy 510 comprises a dictionary database 520 for term substitution. The cipher proxy 510 is also connected to an Internet e-mail system, for example, an Internet Service provider 530, which includes the user's email servers. According to one embodiment of the invention, the proxy implementation accepts email traffic on one port and passes it onto the Internet e-mail system on the appropriate port for that particular service. The cipher proxy takes each email that arrives for the client and using the dictionary replaces each natural language term with the appropriate cipher term. If a new term is encountered, the proxy creates a new entry in the dictionary. Once the transformation is complete, it passes the coded email to the Internet e-mail system for storage in the email store. When the client reads a message from the Internet e-mail system, the message arrives on a known port, a reverse transformation operation is performed by the cipher proxy and the mail content is passed to the client in clear text. In a preferred embodiment, the cipher terms generation mechanism is based upon term occurrence with a stored dictionary mapping. This mechanism is hash-based. The hashing terms are sequential integers based on a key to avoid dictionary problems. A separate dictionary is created for each mailbox or each file within a mailbox.

Optionally and/or in addition to having a terms dictionary that is used at the point of cipher substitution for all messages in a folder or mailbox, a subset of the dictionary terms used in the email message is stored in an encrypted form with the message. This dictionary subset is encrypted using a symmetric key. Symmetric-key algorithms are a class of algorithms for cryptography that use trivially related, often identical, cryptographic keys for both decryption and encryption. An example of this is the Advanced Encryption Standard, AES. The symmetric key is then also encrypted and stored with the mail message. The encryption of the symmetric key is done using Public Key Infrastructure (PKI) technology. A Public Key Infrastructure (PKI) is an arrangement that binds public keys with respective user identities by means of a certificate authority (CA). The user identity must be unique for each CA. The binding is established through the registration and issuance process. The PKI role that assures this binding is called the Registration Authority (RA). For each user, the user identity, the public key, their binding, validity conditions and other attributes are made unforgeable in public key certificates issued by the CA. The symmetric key is encrypted using a set of public keys that would include at a minimum the user and a corporate (or "auditor") key. Thus, for each encryption of a symmetric key under a public key, a separate encrypted key would be stored. Any encryption and decryption mechanism known to one of ordinary skill in the art is contemplated for use in this invention.

According to preferred embodiments of the invention, a process for the coding of a message may include the following steps:
- Take an email message and replace required terms in the message with corresponding terms from the dictionary for the folder or mailbox
- If in this process a new term is encountered, create a new mapping in the dictionary and replace the new word with the new cipher term
- Identify all terms used by this email message
- Create a subset of the dictionary for the terms of this message
- [Optionally, as discussed above, provide a variety of redundant entries for at least frequently-used terms to defeat potential word-frequency attacks.]
- Encrypt the subset dictionary using a symmetric encryption algorithm
- Attach the encrypted subset dictionary to the email message in an extended attributes field
- Use PKI technology to encrypt the symmetric key using a set of public keys for the user, the corporate auditor and other public keys as determined for a particular customer
- Place the encrypted symmetric key packages in an extended attributes field
- Place an encrypted term index for the message in an extended attribute field.
- Transmit the coded email to the Internet e-mail system account where it is stored.
- Transmit the coded email to the organizational archive where a copy is stored.
- Decrypt the encrypted term index
- Integrate the term index as references to this email into the corporate index

When the corporation needs access to ciphered mail in a user's mailbox, that message would be retrieved, the symmetric key would be unlocked using the corporate private key, the dictionary subset for that message would be unencrypted using the symmetric key and the message run through the reverse term substitution cipher process.

It should be noted that there are several alternative embodiments to the process suggested above and certain steps of the process may be altered, omitted performed non-sequentially, or any permutation that yields the successful ciphering and storage and transmission of the message in accordance with the true spirit of the invention as contemplated by one of ordinary skill in the art. Further, system components may be distributed across software, hardware may be co-located on the same platform, may be performed on the same client or server, or may be hosted on the Internet or located within the same enterprise, whenever such distribution or location of components accords with the scope and spirit of the invention. Moreover, the use of the client may be interchanged with the use of a server or vice versa where such substitution is a trivial and insubstantial modification of the design architecture. Further preferred embodiments of e-mail clients may include personal computers, smartphones, cell phones, PDAs, laptops or other portable communication devices.

Benefits of preferred embodiments of the invention include the fact that data stored in the semi-trusted Internet store cannot be easily searched or data- mined. The control fields in email are not touched so email service is unaffected. This mechanism works with any language that is encoded using encoding systems like UNICODE. Further, one of ordinary skill will readily see how to apply this to alternate text formats such as HTML and XML.

Another significant feature and benefit of the system and method is that data stored at an Internet Service Provider would not be able to be mined by the Service Provider. This protects the user and the user's company from having their email read by the third party Service Provider's software and its employees. This protects critical confidential information from being used to garner knowledge about a company's business without significant and illegal effort.

Described embodiments of the invention also protect the data if a mailbox password is cracked. The ciphered email would be useless to anyone who obtained access to the account. Unlike other encryption techniques which only encrypt the body of the message so that email can still be forwarded or replied to and routed, this cipher method allows all sensitive information to be protected while retaining the ability to manage email in the semi-trusted store since the control fields in the email are not touched allowing services to continue to operate. The operational characteristics of the email service are maintained for the user since email is sent from the client in its original form and transformed back to the original form when retrieved from the service for forwarding or reply actions.

While certain embodiments of the present invention have been described, these embodiments are not intended to limit the scope of the present invention. Various modifications of the above described embodiments can be made by those skilled in the art in view of the technology disclosed and the knowledge available to one of ordinary skill in the art. These modifications and alternative embodiments are within the scope of the present invention. The scope of the invention is, therefore, indicated by the appended claims rather than the foregoing description. Furthermore, equivalents and modifications not described above may also be employed without departing from the scope of the invention, which is defined in the accompanying claims.

## Claims

1. A cipher e-mail protection system, comprising:
an e-mail store at a first location;
an Internet e-mail system;
a cipher-proxy device for transmitting messages from said e-mail store to said Internet e-mail system;
a dictionary database for ciphering and reverse ciphering attributes of messages between said e-mail store and said Internet e-mail system; and
an encryption and decryption mechanism for encrypting and decrypting attributes of said messages.

2. A method for securing messages, comprising the steps of:
generating a message;
performing a security transformation in said message in one or more fields;
transmitting said transformed message to an Internet e-mail system; and
storing said transformed message at the Internet e-mail system.

3. The method of claim 2, wherein the security transformation for a given field is a term substitution cipher.

4. The method of claim 2, wherein the security transformation for a given field is asymmetric encryption.

5. The method of claim 2, wherein the security transformation for a given field is symmetric encryption.

6. A method of generating and accessing transformed messages, comprising the steps of:
generating a message;
performing a security transformation in said message in one or more fields;
transmitting the transformed message to an Internet e-mail system;
storing said transformed message at the Internet e-mail system; and
accessing said message and performing a reverse security transformation on said message.

7. The method of claim 6, wherein the security transformation for a given field is a term substitution cipher.

8. The method of claim 6, wherein the security transformation for a given field is asymmetric encryption.

9. The method of claim 6, wherein the security transformation for a given field is symmetric encryption.

10. The method of claim 7, comprising:
creating a cipher index;
searching for said message using said cipher index;
retrieving said transformed message;
decoding said transformed message using said cipher index; and
viewing said message with an e-mail client.

11. A method for performing a security transformation on a message, comprising the steps of:
generating a message;
performing a cipher substitution of attributes of said message;
encrypting attributes of said message;
transmitting said transformed and encrypted message from an e-mail store to an Internet e-mail system; and
storing said transformed and encrypted message at the Internet e-mail system.

12. A method of generating and accessing ciphered messages, comprising the steps of:
generating a message at first location;
performing a cipher substitution of terms in a message;
creating a cipher index;
encrypting said index;
transmitting the ciphered and encrypted message to the Internet e-mail system;
storing said ciphered message at the Internet e-mail system;
searching said message using said cipher index;
retrieving said ciphered and encrypted message;
decoding said ciphered message using said cipher index;
decrypting said index;
decrypting attributes of said message; and
viewing said message with an e-mail client.

13. The method of claim 12, wherein the message is identified by searching said message using said cipher index.

14. A method of generating and accessing ciphered messages, comprising the steps of:
replacing required terms in an email message with corresponding terms from a dictionary for the folder or mailbox;
if a new term is encountered while replacing, creating a new mapping in the dictionary, and replacing the new word with the new cipher term;
identifying all terms used by the email message;
creating a subset of the dictionary for the terms of the message;
encrypting the subset dictionary using a symmetric encryption algorithm;
attaching the encrypted subset dictionary to the email message in an extended attributes field;
using PKI technology to encrypt the symmetric key using a set of public keys for one or more users as required;
placing the encrypted symmetric key packages in an extended attributes field;
placing an encrypted term index for the message in an extended attribute field;
transmitting the coded email to the Internet e-mail system account where it is stored;
transmitting the coded email to the organizational archive where a copy is stored;
decrypting the encrypted term index; and
integrating the term index as references to this email into the corporate index.

15. The method of claim 14, wherein a variety of redundant entries are provided in the dictionary for at least frequently-used terms to defeat potential word-frequency attacks.
